Europäisches Patentamt

European Patent Office

Office européen des brevets

(19)

(11) Veröffentlichungsnummer: **0 184 036**
**B1**

(12) **EUROPÄISCHE PATENTSCHRIFT**

(45) Veröffentlichungstag der Patentschrift: **01.08.90**

(51) Int. Cl.⁵: **G 05 B 19/18**

(21) Anmeldenummer: **85114389.1**

(22) Anmeldetag: **12.11.85**

(54) Numerische Steuerung für Werkzeugmaschinen.

(30) Priorität: **26.11.84 DE 3443016**

(43) Veröffentlichungstag der Anmeldung:
**11.06.86 Patentblatt 86/24**

(45) Bekanntmachung des Hinweises auf die
Patenterteilung:
**01.08.90 Patentblatt 90/31**

(84) Benannte Vertragsstaaten:
**DE FR IT SE**

(56) Entgegenhaltungen:
**DE-A-2 224 518**
**US-A-3 987 350**
**US-A-4 053 819**

(73) Patentinhaber: **Siemens Aktiengesellschaft**
**Wittelsbacherplatz 2**
**D-8000 München 2 (DE)**

(72) Erfinder: **Reimann, Jürgen-Andreas, Dipl.-Ing.**
**Rennesstrasse 35**
**D-8520 Erlangen (DE)**
Erfinder: **Basilowski, Herbert, Dipl.-Ing.**
**Ringstrasse 26**
**D-8521 Spardorf (DE)**

Courier Press, Leamington Spa, England.

**Beschreibung**

Die Erfindung bezieht sich auf eine numerische Steuerung für Werkzeugmaschinen zum Herstellen von Verzahnungen, bei der Werkstück und Werkzeug eine Realtivbewegung zueinander ausführen, indem aus der Ist-Position mindestens einer Bewegungsachse des Werkzeugs über einen jeweils vorgebbaren Umsetzfaktor eine Führungsgröße für den Lagerregelkreis des Werkstücks abgeleitet ist.

Zum Herstellen von Verzahnungen mit Werkzeugmaschinen, z.B. Walzfräsmaschinen, ist es erforderlich, daß Werkzeug und Werkstück mit vorgegebener Übersetzung zueinander relativ gedreht werden. Im Regelfall wird die Drehung des Werkzeuges, z.B. eines Fräsers, als Leitbewegung benutzt und die entsprechende Drehung der Werkstücke durch Teilungsgetriebe erreicht. Zur gleichmäßigen Werkzeugabnutzung und zur Herstellung von Schrägverzahnungen werden gegebenenfalls zusätzlich weitere Bewegungen des Werkzeuges als Leitachsen noch additiv überlagert.

Will man die mechanischen Getriebe vermeiden und eine elektronische Nachführung des Werkstückes gegenüber dem Werkzeug erreichen, so wird im Lagerregelkreis des Werkstückes als Sollwert eine der Drehung des Werkzeuges proportionale Größe vorgegeben. Zusätzlich werden gegebenenfalls auch noch weitere Bewegungen in weiteren Achsen des Werkzeuges additiv überlagert.

Im elektronischen Lagerregelkreis des Werkstückes tritt nun, bedingt durch die physikalischen Verhältnisse, ein Schleppabstand, d.h. eine Differenz zwischen momentaner Sollposition und gewünschter Istposition, auf. Dieser Schleppfehler führt zu Ungenauigkeiten bei der Herstellung der Verzahnung.

Aus der DE—A—2 224 918 ist eine numerische Steuerung für Werkzeugmaschinen bekannt, bei der die Bewegung des Werkstückes von mindestens einer Bewegung des Werkzeuges abhängig gemacht ist, derart, daß aus der Istposition des Werkzeuges eine Führungsgröße für den Lagerregelkreis des Werkstückes abgeleitet ist, und aus der Istgeschwindigkeit des Werkzeuges und aus dem Getriebeübersetzungsverhältnis des Lagerregelkreises des Werkstückes eine für den Schleppabstand des Werkstückes repräsentative Korrekturgröße berechnet ist und diese Größe im Sinne einer Verringerung des Schleppabstandes der Führungsgröße aufgeschaltet ist. Eine Anwendung des Steuerungsprinzips für Werkzeugmaschinen zum Herstellen von Verzahnungen ist dabei nicht vorgesehen.

Die Aufgabe der vorliegenden Erfindung besteht darin, eine Einrichtung der eingangs genannten Art auf einfache Weise so auszubilden, daß Verzahnungen mit hoher Genauigkeit hergestellt werden können.

Diese Aufgabe wird erfindungsgemäß dadurch gelöst, daß aus dem Produkt einer der jeweiligen Istposition zugeordneten Istgeschwindigkeit des Werkzeugs und dem Kehrwert der Kreisverstärkung des Lagerregelkreises des Werkstücks jeweils eine Korrekturgröße berechnet ist und diese Größe in Sinne einer Verringerung eines Schleppabstandes des Werkzeugs additiv der Führungsgröße aufgeschaltet ist.

Auf diese Weise kann man eine weitgehende Vorabkorrektur des Schleppabstandes erreichen. Diese Korrektur ist nicht nur auf den aus der Werkzeugdrehzahl abgeleiteten Schleppabstand anwendbar, sondern ebenfalls auf den aus der linearen Werkzeugbewegung abgeleiteten Schleppabstand.

Die Istgeschwindigkeiten aller bewegten Achsen des Werkzeugs können dabei der Einfachheit halber zu einer resultierenden Istgeschwindigkeit zusammengeführt sein.

Statt einer Einzelberechnung dieser Korrekturgrößen ist es auch möglich, daß die Korrekturgröße aus der Geschwindigkeit der Führungsgrößenänderung der unkorrigierten Führungsgröße und dem Kehrwert der Kreisverstärkung im Lagerregelkreis des Werkstücks berechnet ist. Dieses Verfahren bietet sich an, wenn die Berechnung und auch die Lageregelung weitgehend durch eine Rechnersteuerung, wie an sich bei numerischen Werkzeugmaschinen üblich, übernommen ist.

Anhand eines in der Zeichnung dargestellten Ausführungsbeispiels sei die Erfindung näher erläutert; es zeigen:

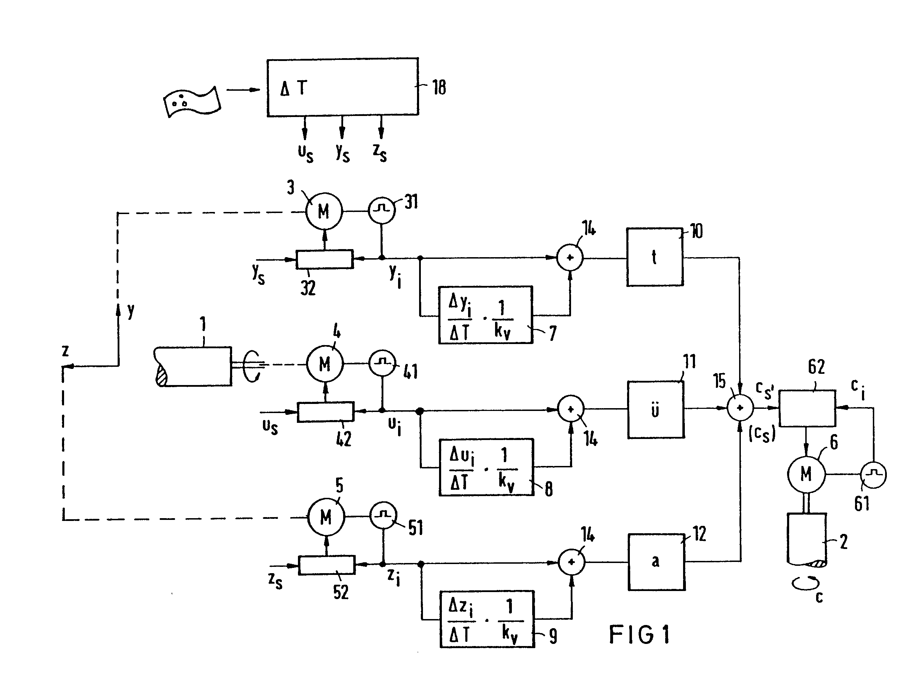

Figur 1 ein Prinzipschaltbild der Steuereinrichtung und

Figur 2 eine Abwandlung des Korrekturteils.

Zur Bewegung des Werkzeuges 1 in den Achsen u (Drehachse) und y, z (lineare Achsen) sind elektrische Antriebsmotoren 3, 4, 5 vorgesehen, denen jeweils ein Lage- bzw. Winkelregelkreis zugeordnet ist. Diese Kreise enthalten neben den Regel- und Steuergeräten 32, 42 und 52 für die Motoren 3 bis 5, denen die Sollwerte $u_s$, $y_s$ und $z_s$ von der überlagerten Rechnersteuerung 18 zugeführt werden, noch mit den Motoren 3 bis 5 gekoppelte Weg- bzw. Winkelgeber 31, 41 und 51, die Lage- bzw. Winkelistwerte des Werkzeuges 1 liefern.

Zur Herstellung von Verzahnungen, z.B. mit einer Walzfräsmaschine, muß die Drehung in der Achse c des Werkstückes 2 von der Drehung in der Achse u des Werkzeuges 1 und gegebenenfalls auch noch von dessen axialen und tangentialen Bewegungen in den Achsen y, z abhängig gemacht werden.

Hierzu werden aus dem Lageregelkreis für die drei vorerwähnten Bewegungen in den Achsen u, y, z die Istwerte $u_i$, $y_i$, $z_i$ über entsprechend der gewünschten Getriebeuntersetzung t, ü, a eingestellte Teiler 10, 11, 12 geführt und im Addierglied 15 zu einer Führungsgröße $c_s$ für den Regelkreis 62 des Motors 6 für das Werkstück 2 addiert. Der Regelkreis 62 erhält seinen Istwert $c_i$ von einem mit dem Motor 6 gekuppelten Winkelschrittgeber 61.

Betrachtet man nun z.B. nur die Achse u und die daraus abgeleitete Führungsgröße für die Achse c, so muß gelten:

$$c_s = \ddot{u} \cdot u_i \text{ oder } \dot{c}_s = \ddot{u} \cdot \dot{u}_i,$$

wobei

2

$\dot{c}_s$ und $\dot{u}$ die Geschwindigkeiten in den Achsen c, u sind.
Der hieraus resultierende Schleppfehler ergibt sich zu:

$$\Delta c = \frac{c_s}{k_v}$$

wobei $k_v$ die Verstärkung im Lageregelkreis des Werkstückes 2 ist.
Nach Einsetzung ergibt sich hieraus:

$$\Delta c = \frac{\ddot{u} \cdot \ddot{u}i}{k_v}$$

Der auf die Drehung des Werkzeuges 1 zurückzuführende Schleppabstand $\Delta c$ des Werkstückes 2 läßt sich also auf diese Weise vorausberechnen. Entsprechendes gilt für die durch die übrigen Achsen y, z bedingten Bewegungen, die ebenfalls zu Schleppfehlern führen. Eine Addition dieser drei Schleppfehler ergibt dann den zu erwartenden Gesamtschleppfehler am Werkstück.

Wenn die Steuerung in einem vorgegebenen Rechnertakt $\Delta T$ arbeitet, so ist eine Positionsänderung bzw. Winkeländerung in diesem Takt gleichzeitig ein Maß für die Geschwindigkeit in der betreffenden Achse, also:

$$\ddot{u} = \frac{\Delta u_i}{\Delta T} \qquad \hat{y} = \frac{\Delta yi}{\Delta T} \qquad \hat{z} = \frac{\Delta z_i}{\Delta T}$$

In Rechengliedern 7, 8 und 9 werden die den vorgenannten Größen entsprechenden Werte gebildet, mit dem Kehrwert der Kreisverstärkung $k_v$ multipliziert und in den Addierpunkten 14 zusätzlich den Istwerten hinzugefügt. Damit wird eine korrigierte Führungsgröße $c'_s$ erzeugt, die die Schleppfehler vorwegnimmt. Damit wird die Bewegung in der c-Achse exakt der Bewegung des Werkzeuges 1 angepaßt.

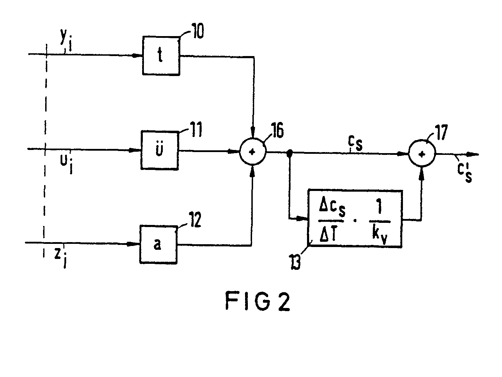

Eine schaltungsmäßige Vereinfachung der Korrektur ergibt sich gemäß Figur 2, wenn im Addierpunkt 16 der Wert $c_s$ gebildet wird, hieraus dann die Geschwindigkeit der Führungsgrößenänderung $\Delta c / \Delta T$ bestimmt und nach Multiplikation mit dem Kehrwert des Verstärkungsfaktors im Lageregelkreis zu dem vorher bestimmten Wert der Führungsgröße $c_s$ im Punkt 17 addiert wird. Hieraus ergibt sich dann die auch den Schleppfehler kompensierende Führungsgröße $c'_s$ für den Lageregelkreis des Werkstückes 2.

In der vorliegenden Beschreibung wurde die Regelstruktur anhand einzelner Schaltungsblöcke erläutert. Im Regelfall werden heute die einzelnen Funktionen nicht mehr durch diskrete Elemente ausgeführt, sondern als Regelfunktion im Rahmen einer Rechnersteuerung verwirklicht.

**Patentansprüche**

1. Numerische Steuerung für Werkzeugmaschinen zum Herstellen von Verzahnungen, bei der Werkstück und Werkzeug eine Relativbewegung zueinander ausführen, indem aus der Ist-Position mindestens einer Bewegungsachse des Werkzeugs über einen jeweils vorgebbaren Umsetzfaktor eine Führungsgröße für den Lageregelkreis des Werkstücks abgeleitet ist, dadurch gekennzeichnet, daß aus dem Produkt einer der jeweiligen Istposition ($y_i$, $u_i$, $z_i$) zugeordneten Istgeschwindigkeit des Werkzeugs (1) und dem Kehrwert der Kreisverstärkung ($k_v$) des Lageregelkreises (62) des Werkstücks (2) jeweils eine Korrekturgröße berechnet ist und diese Größe in Sinne einer Verringerung eines Schleppabstandes des Werkzeugs (1) additiv der Führungsgröße ($c_s$) aufgeschaltet ist.

2. Numerische Steuerung nach Anspruch 1, dadurch gekennzeichnet, daß die Istgeschwindigkeiten aller bewegten Achsen (u, y, z) des Werkzeugs (1) zu einer resultierenden Istgeschwindigkeit zusammengeführt sind.

3. Numerische Steuerung nach Anspruch 1, dadurch gekennzeichnet, daß die Korrekturgröße aus der Geschwindigkeit der Führungsgrößenänderung der unkorrigierten Führungsgröße und dem Kehrwert der Kreisverstärkung ($k_v$) im Lageregelkreis (62) des Werkstücks berechnet ist.

**Revendications**

1. Dispositif de commande numérique pour des machines-outils pour fabriquer des dentures, dans lequel la pièce à usiner et l'outil exécutent un déplacement relatif l'un par rapport à l'autre et dans lequel une grandeur de commande pour le circuit de régulation de la position de la pièce à usiner est dérivée de la position réelle d'au moins un axe de déplacement de l'outil, moyennant l'application d'un facteur de conversion pouvant être respectivement prédéterminé, caractérisé par le fait qu'une grandeur de correction est calculée respectivement à partir du produit d'une vitesse réelle de l'outil (1), associée à la position réelle respective ($y_i$, $u_i$, $z_i$), par l'inverse de l'amplification ($k_v$) du circuit (62) de régulation de la

# EP 0 184 036 B1

position de la pièce à usiner (2), et que cette grandeur est appliquée de façon additive à la grandeur de commande ($c_s$), dans le sens d'une réduction d'un écart d'asservissement de l'outil (1).

2. Dispositif de commande numérique suivant la revendication 1, caractérisé par le fait que les vitesses réelles de tous les axes mobiles (u, y, z) de l'outil (1) sont réunies pour former une vitesse réelle résultante.

3. Dispositif de commande numériquement suivant la revendication 1, caractérisé par le fait que la grandeur de correction est calculée à partir de la vitesse de la variation de la grandeur de commande non corrigée et à partir de l'inverse de l'amplification ($k_v$) du circuit (62) de régulation de la position de la pièce à usiner.

## Claims

1. Numerical control for machine tools for producing gear teeth, in which work piece and tool execute a relative movement in relation to each other while a command variable for the position control loop of the work piece is derived from the actual position of at least one axis of motion of the tool by way of a conversion factor which can be preset in each case, characterised in that from the product of an actual speed of the tool (1) associated with the respective actual position ($y_i$, $u_i$, $z_i$) and the reciprocal value of the loop gain ($k_v$) of the position control loop (62) of the work piece (2), a respective correction quantity is calculated and this quantity is applied additively to the command variable ($c_s$) for the purpose of reducing a following error of the tool (1).

2. Numerical control according to claim 1, characterised in that the actual speeds of all moving axes (u, y, z) of the tool (1) are brought together to give a resultant actual speed.

3. Numerical control according to claim 1, characterised in that the correction quantity is calculated from the speed of the command variable change of the uncorrected command variable and the reciprocal value of the loop gain ($k_v$) in the position control loop (62) of the work piece.

4

$\Delta T$   18

$u_s$   $y_s$   $z_s$

3   M   31

$y_s$   32   $y_i$

14   t   10

$$\frac{\Delta y_i}{\Delta T} \cdot \frac{1}{k_v} \quad 7$$

1

4   M   41

$u_s$   42   $v_i$

14   ü   11

$$\frac{\Delta v_i}{\Delta T} \cdot \frac{1}{k_v} \quad 8$$

15   $c_{s'}$   62   $c_i$

$(c_s)$

M   6

61

2

c

5   M   51

$z_s$   52   $z_i$

14   a   12

$$\frac{\Delta z_i}{\Delta T} \cdot \frac{1}{k_v} \quad 9$$

y

z

FIG 1

FIG 2